# FASCICULE DE BREVET EUROPEEN

(11) **EP 3 398 805 B1**
(45) Date de publication et mention de la délivrance du brevet: **16.09.2020**
(21) Numéro de dépôt: 18170834.8
(22) Date de dépôt: 04.05.2018
(51) Int. Cl.: B60N 2/14, B61D 33/00

(54) **DISPOSITIF SÉCURISÉ DE ROTATION D'UN SIÈGE, NOTAMMENT POUR UN VÉHICULE FERROVIAIRE**
GESICHERTE VORRICHTUNG ZUM DREHEN EINES SITZES, INSBESONDERE FÜR EIN SCHIENENFAHRZEUG
SECURE DEVICE FOR ROTATING A SEAT, IN PARTICULAR FOR A RAILWAY VEHICLE

(30) Priorité: 04.05.2017 FR 1753943
(43) Date de publication de la demande: 07.11.2018
(73) Titulaire: ALSTOM Transport Technologies, 93400 Saint-Ouen (FR)
(72) Inventeur: PAILLER, Christophe, 17180 Perigny (FR); LUGOL, Jean-Louis, 17540 Verines (FR); FEBVRE, Julien, 27930 Angervilles La Campagne (FR)
(74) Mandataire: Lavoix

(56) Documents cités:
- DE-A1-102013 016 290
- GB-A- 774 510
- US-A- 2 089 356
- US-A1- 2009 085 367
- US-A1- 2011 121 631

## Description

La présente invention concerne un dispositif de rotation d'un siège, notamment pour véhicule ferroviaire.

Un tel dispositif de rotation est plus particulièrement destiné à équiper une salle voyageurs d'un véhicule ferroviaire, notamment un train à grande vitesse ou tout train grandes lignes.

En effet, le dispositif de rotation a pour but de permettre d'orienter le siège correspondant dans le sens de marche du véhicule, afin d'améliorer le confort du passager utilisant ce siège.

Ainsi, avant chaque trajet emprunté par le véhicule ferroviaire, un opérateur actionne le dispositif de rotation pour orienter le siège dans le bon sens.

Des exemples de dispositif de rotation de siège sont décrits US 2009/085367 A1 et GB 774510 A.

L'invention a notamment pour but de sécuriser un tel dispositif de rotation, afin d'éviter une activation accidentelle de ce dispositif par un passager.

A cet effet, l'invention a notamment pour objet un dispositif de rotation d'un siège, notamment pour véhicule ferroviaire, comportant :
- un socle de réception du siège, rotatif autour d'un axe vertical entre deux positions angulaires extrêmes,
- des moyens de verrouillage du socle dans les deux positions angulaires extrêmes, et
- des moyens de déverrouillage du socle,
caractérisé en ce que les moyens de déverrouillage comportent des premier et second organes de commande, les moyens de déverrouillage étant configurés pour déverrouiller le socle uniquement lorsque les premier et second organes de commande sont actionnés simultanément.

Le dispositif de rotation selon l'invention nécessite l'actionnement simultané de deux organes de commande distincts pour permettre la rotation du siège, rendant peu probable une activation accidentelle de cette rotation.

Un dispositif de rotation selon l'invention peut comporter en outre l'une ou plusieurs des caractéristiques suivantes, prises seules ou selon toutes combinaisons techniquement envisageables.
- Le dispositif de rotation comporte une structure de support du siège, comportant le socle, le premier organe de commande étant formé par une pédale agencée sur la structure de support.
- Le second organe de commande est formé par un premier bouton ménagé sur un premier accoudoir du siège.
- Le bouton de l'accoudoir est un bouton de commande de l'inclinaison du siège.
- Le dispositif de rotation comporte deux seconds organes de commande, indépendants l'un de l'autre, l'un étant formé par ledit premier bouton, et l'autre étant formé par un second bouton ménagé sur un second accoudoir du siège.
- Les moyens de déverrouillage sont configurés pour rester actifs lorsque le socle est dans une position angulaire intermédiaire, entre les positions angulaires extrêmes.
- Les premier et second organes de commande sont des organes de commande pneumatiques.

L'invention concerne également un dispositif de confort de véhicule ferroviaire, comportant un siège, caractérisé en ce qu'il comporte un dispositif de rotation du siège tel que défini précédemment, sur lequel est agencé le siège (8).

L'invention concerne enfin un procédé de rotation d'un siège d'un dispositif de confort tel que défini précédemment, caractérisé en ce qu'il comporte :
- l'actionnement simultané des premier et second organes de commande, et
- l'entrainement en rotation du siège autour de l'axe vertical, depuis l'une vers l'autre des positions angulaires extrêmes.

L'invention sera mieux comprise à la lecture de la description qui va suivre, donnée uniquement à titre d'exemple et faite en se référant aux figures annexées, parmi lesquelles :
- la figure 1 est une vue de profil d'un siège de véhicule ferroviaire, équipé d'un dispositif de rotation selon un exemple de mode de réalisation de l'invention ;
- la figure 2 est une vue en perspective d'un support du siège de la figure 1 ;
- la figure 3 est une vue schématique d'un réseau pneumatique de verrouillage/déverrouillage du dispositif de rotation.

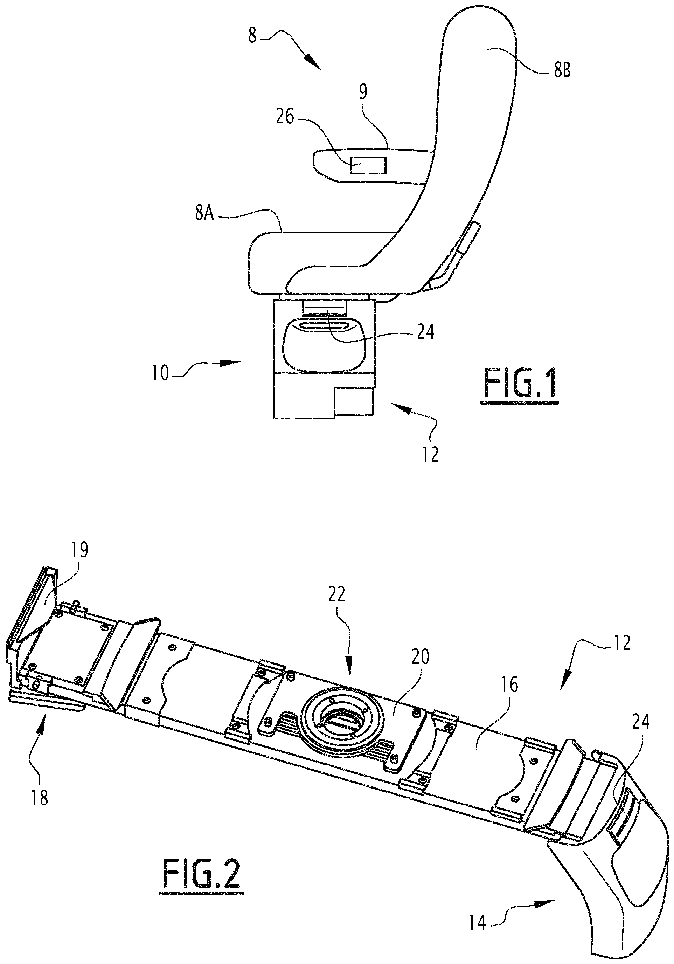

On a représenté, sur la figure 1, un siège 8 destiné à équiper un véhicule ferroviaire, et plus particulièrement destiné à équiper une salle voyageurs du véhicule ferroviaire.

Dans l'exemple décrit, le siège 8 est du type simple, destiné à être utilisé par une personne. Un tel siège simple comporte une assise 8A, un dossier 8B et au moins un accoudoir 9, notamment deux accoudoirs 9 disposés de part et d'autre de l'assise 8A.

En variante, le siège 8 pourrait être du type double, destiné à être utilisé par deux personnes. Un tel siège double comporte deux assises disposées l'une à côté de l'autre, et deux dossiers, chacun prolongeant une assise respective. Un siège double comporte également des accoudoirs, par exemple trois accoudoirs (un accoudoir entre les assises, et les autres de part et d'autre du siège double) ou quatre accoudoirs (deux accoudoirs de part et d'autre de chaque assise).

Le siège 8 est équipé d'un dispositif 10 de rotation, permettant la rotation du siège 8 autour d'un axe vertical, entre deux positions angulaires extrêmes. Le dispositif de rotation 10 permet par exemple une rotation du siège à 180°, permettant d'aligner le siège avec une direction longitudinale du train, dans un sens ou un autre.

Le dispositif de rotation 10 comporte une structure 12 de support du siège 8, représentée plus en détail sur la figure 2.

La structure de support 12 comporte un pied 14 destiné à être tourné vers un couloir adjacent au siège 8, un plateau de support 16 porté par le pied 14, et un organe de fixation 18. Dans l'exemple décrit, l'organe de fixation 18 permet la fixation de la structure de support 12 à une paroi latérale délimitant la salle voyageurs. En variante, l'organe de fixation 18 pourrait être formé par un autre pied de forme similaire à celle du pied 14.

Avantageusement, l'organe de fixation 18 porte une butée 19 de calage du siège 8, limitant les mouvements du siège 8 lorsqu'il est verrouillé.

La structure de support 12 comporte un socle 20 de réception du siège 8, rotatif autour de l'axe vertical entre deux positions angulaires extrêmes. Le socle 20 est lié au plateau de support 16 au moyen d'une liaison pivot 22 définie autour de l'axe vertical.

Le dispositif de rotation 10 comporte par ailleurs des moyens de verrouillage du socle 20 dans les deux positions angulaires extrêmes. Les moyens de verrouillage comportent par exemple au moins un premier élément de verrouillage porté par le siège 8, et au moins un second élément de verrouillage complémentaire porté par la structure de support 12. Le premier élément de verrouillage coopère avec le second élément de verrouillage lorsque le siège est verrouillé en position.

Le dispositif de rotation 10 comporte également des moyens de déverrouillage du socle, propres à désactiver les moyens de verrouillage. Par exemple, les moyens de déverrouillage sont propres à déplacer le premier élément de verrouillage par rapport au second élément de verrouillage, de manière à l'éloigner de celui-ci.

Conformément à l'invention, les moyens de déverrouillage comportent des premier 24 et second 26 organes de commande. Les moyens de déverrouillage sont alors configurés pour déverrouiller le socle 20 uniquement lorsque les premier 24 et second 26 organes de commande sont actionnés simultanément.

Par exemple, le premier organe de commande 24 est formé par une pédale agencée sur la structure de support 12, et plus particulièrement sur le pied 14 de la structure de support 12. Le pied 14 étant agencé du côté du couloir adjacent au siège 8, la pédale 24 est accessible depuis ce couloir, et peut être actionnée par une action d'un pied de l'opérateur. La pédale 24 présente donc des dimensions suffisamment importantes pour permettre aisément un tel actionnement par le pied de l'opérateur.

Avantageusement, la pédale 24 présente une surface accessible antidérapante. Par exemple, à cet effet, la surface accessible est pourvue d'un gaufrage.

La pédale 24 est par exemple articulée par coulissement dans le pied 14, cette articulation étant par exemple assurée au moyen de bagues de friction. Un ressort de rappel est agencé dans le pied 14, pour le rappel élastique de la pédale 24 dans sa position initiale après actionnement. Le coulissement de la pédale 24 est de préférence limité par des butées mécaniques.

Le second organe de commande 26 est par exemple formé par un bouton ménagé sur l'un des accoudoirs 9. Avantageusement, ce bouton de l'accoudoir 9 est un bouton de commande de l'inclinaison du siège 8. Ce bouton 24 est donc à la fois propre à commander l'inclinaison du siège 8 et, lorsqu'il est actionné simultanément au premier organe de command 24, à commander la rotation du siège 8.

De préférence, les accoudoirs 9 comprennent un premier et un second accoudoirs. Le premier accoudoir 9 comporte un premier bouton de commande, et le second accoudoir 9 comporte un second bouton de commande. Les premier et second boutons de commande forment chacun un second organe de commande 26, indépendamment l'un de l'autre.

Ainsi, en fonction du sens dans lequel est tourné le siège, le bouton de commande actionné est celui qui est du côté du couloir adjacent à ce siège.

On notera que, dans ce cas où les moyens de déverrouillage comportent deux seconds organes de commande 26, seul l'un d'entre eux commande également l'inclinaison du siège 8. L'autre second organe de commande 26 est alors de préférence dissimulé sous une garniture de l'accoudoir 9 correspondant.

En variante, les deux seconds organes de commande26 sont également propres à commander l'inclinaison du siège 8.

Chaque bouton de commande 26 est mobile en translation (enfoncement) dans l'accoudoir 9 correspondant. Un organe élastique est agencé dans l'accoudoir pour le rappel élastique du bouton de commande 26 vers sa position initiale après actionnement. De préférence, l'enfoncement de chaque bouton de commande 26 est limité par une butée correspondante.

Avantageusement, les moyens de déverrouillage sont configurés pour rester actifs lorsque le socle 20 est dans une position angulaire intermédiaire, entre les positions angulaires extrêmes.

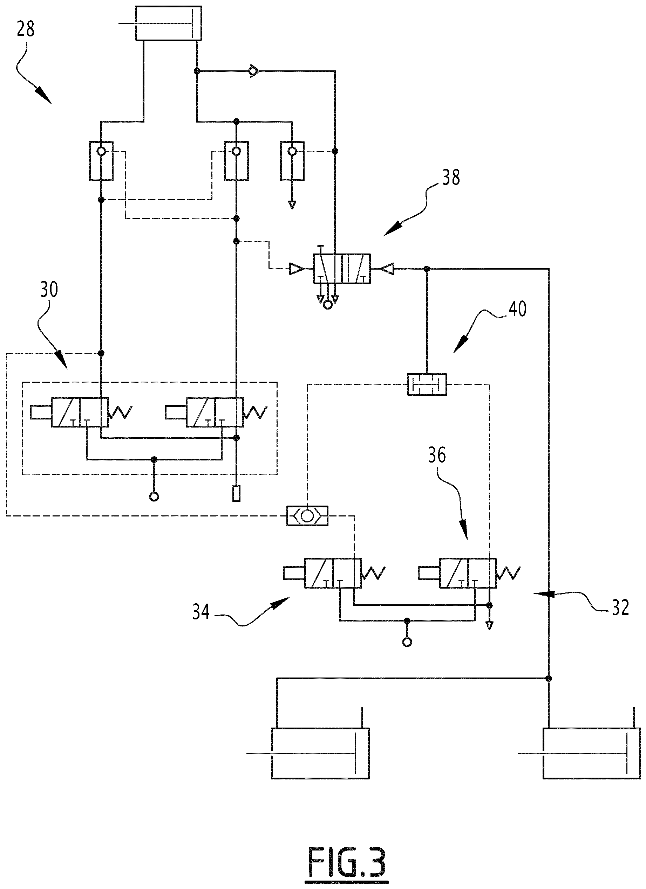

De préférence, les moyens de déverrouillage comportent un circuit pneumatique 28, notamment tel que représenté sur la figure 3.

Le circuit pneumatique 28 comporte une partie 30 de commande pneumatique dans l'accoudoir et une partie 32 de commande pneumatique de déverrouillage au pied.

La partie 30 de commande pneumatique dans l'accoudoir comporte un premier capteur pneumatique 34, actionné par l'enfoncement de l'un ou l'autre des boutons de commande 26.

La partie 32 de commande pneumatique de déverrouillage au pied comporte un second capteur pneumatique 36, actionné par l'enfoncement de la pédale 24.

Le circuit pneumatique 28 comporte par ailleurs une partie 38 de commande de remontée automatique du siège 8.

Cette partie de commande 38 de remontée automatique est commandée par les premier 34 et second 36 capteurs pneumatiques, par l'intermédiaire d'une fonction ET 40. En d'autres termes, la partie de commande 38 ne commande la remontée automatique que lorsque le premier 34 et le second 36 capteurs pneumatiques sont simultanément actionnés.

Ainsi, la rotation du siège 8 est mise en œuvre au cours d'un procédé de rotation qui va maintenant être décrit.

Le procédé comporte l'actionnement simultané des premier 24 et second 26 organes de commande, par un opérateur. Les premier 34 et second 36 capteurs pneumatiques sont alors actionnés, entrainant, par l'intermédiaire de la fonction ET 40, l'activation de la partie 38 de commande de remontée automatique du siège 8, qui est en position relevée et a une inclinaison minimale par rapport à l'axe vertical.

Le procédé comporte ensuite l'entrainement en rotation du siège 8 autour de l'axe vertical, depuis l'une vers l'autre des positions angulaires extrêmes. Avantageusement, l'actionnement des premier 24 et second 26 organes de commande est accompagné ou suivi d'un effort de poussé appliqué sur le siège permettant d'entraîner le siège 8 en rotation. Il est ensuite possible de relâcher l'action sur les premier 24 et second 26 organes de commande et de poursuivre la rotation du siège jusqu'à l'une des positions angulaires extrêmes.

## Revendications

1. Dispositif (10) de rotation pour un siège (8), notamment pour véhicule ferroviaire, comportant :
- un socle (20) de réception du siège (8), rotatif autour d'un axe vertical entre deux positions angulaires extrêmes,
- des moyens de verrouillage du socle (20) dans les deux positions angulaires extrêmes, et
- des moyens de déverrouillage du socle,
**caractérisé en ce que** les moyens de déverrouillage comportent des premier (24) et second (26) organes de commande, les moyens de déverrouillage étant configurés pour déverrouiller le socle (20) uniquement lorsque les premier (24) et second (26) organes de commande sont actionnés simultanément.

2. Dispositif de rotation (10) selon la revendication 1, comportant une structure (12) de support du siège (8), comportant le socle (20), le premier organe de commande (24) étant formé par une pédale agencée sur la structure de support (12).

3. Dispositif de rotation (10) selon la revendication 1 ou 2, dans lequel le second organe de commande (26) est formé par un premier bouton ménagé sur un premier accoudoir (9) du siège (8).

4. Dispositif de rotation (10) selon la revendication 3, dans lequel le premier bouton est un bouton de commande de l'inclinaison du siège (8).

5. Dispositif de rotation (10) selon la revendication 3 ou 4, comportant deux seconds organes de commande (26), indépendants l'un de l'autre, l'un étant formé par ledit premier bouton, et l'autre étant formé par un second bouton ménagé sur un second accoudoir (9) du siège (8).

6. Dispositif de rotation (10) selon l'une quelconque des revendications précédentes, dans lequel les moyens de déverrouillage sont configurés pour rester actifs lorsque le socle (20) est dans une position angulaire intermédiaire, entre les positions angulaires extrêmes.

7. Dispositif de rotation (10) selon l'une quelconque des revendications précédentes, dans lequel les premier (24) et second (26) organes de commande sont des organes de commande pneumatiques.

8. Dispositif de confort pour un véhicule ferroviaire, comportant un siège (8), **caractérisé en ce qu'**il comporte un dispositif (10) de rotation du siège (8) selon l'une quelconque des revendications 1 à 7, sur lequel est agencé le siège (8).

9. Procédé de rotation d'un siège (8) d'un dispositif de confort selon la revendication 8, **caractérisé en ce qu'**il comporte :
- l'actionnement simultané des premier (24) et second (26) organes de commande, et
- l'entrainement en rotation du siège (8) autour de l'axe vertical, depuis l'une vers l'autre des positions angulaires extrêmes.

## Patentansprüche

1. Vorrichtung (10) zum Drehen für einen Sitz (8), insbesondere für ein Schienenfahrzeug, welche aufweist:
- einen Sockel (20) zum Aufnehmen des Sitzes (8), welche um eine vertikale Achse zwischen zwei extremen Winkelpositionen drehbar ist,
- Mittel zum Verriegeln des Sockels (20) in den beiden extremen Winkelpositionen und
- Mittel zum Entriegeln des Sockels,
**dadurch gekennzeichnet, dass** die Mittel zum Entriegeln ein erstes (24) und ein zweites (26) Steuerungsorgan aufweisen, wobei die Mittel zum Entriegeln eingerichtet sind, um den Sockel (20) nur zu entriegeln, wenn das erste (24) und das zweite (26) Steuerungsorgan gleichzeitig betätigt werden.

2. Vorrichtung zum Drehen (10) gemäß Anspruch 1, welche eine Struktur (12) zum Halten des Sitzes (8) aufweist, welche den Sockel (20) aufweist, wobei das erste Steuerungsorgan (24) mittels eines Pedals gebildet ist, welches an der Struktur zum Halten (12) angeordnet ist.

3. Vorrichtung zum Drehen (10) gemäß Anspruch 1 oder 2, wobei das zweite Steuerungsorgan (26) mittels eines ersten Knopfes gebildet ist, welcher an einer ersten Armlehne (9) des Sitzes (8) bereitgestellt ist.

4. Vorrichtung zum Drehen (10) gemäß Anspruch 3, wobei der erste Knopf ein Knopf zum Steuern der Neigung des Sitzes (8) ist.

5. Vorrichtung zum Drehen (10) gemäß Anspruch 3 oder 4, welche zwei zweite Steuerungsorgane (26) aufweist, welche unabhängig voneinander sind, wobei das eine mittels des besagten ersten Knopfes gebildet ist, und wobei das andere mittels eines zweiten Knopfes gebildet ist, welcher an einer zweiten Armlehne (9) des Sitzes (8) bereitgestellt ist.

6. Vorrichtung zum Drehen (10) gemäß irgendeinem der vorherigen Ansprüche, wobei die Mittel zum Entriegeln eingerichtet sind, um aktiv zu bleiben, wenn der Sockel (20) in einer Zwischenwinkelposition zwischen den extremen Winkelpositionen ist.

7. Vorrichtung zum Drehen (10) gemäß irgendeinem der vorherigen Ansprüche, wobei das erste (24) und das zweite (26) Steuerungsorgan pneumatische Steuerungsorgane sind.

8. Komfortvorrichtung für ein Schienenfahrzeug, welche einen Sitz (8) aufweist, **dadurch gekennzeichnet, dass** sie eine Vorrichtung (10) zum Drehen des Sitzes (8) gemäß irgendeinem der Ansprüche 1 bis 7, an welcher der Sitz (8) angeordnet ist, aufweist.

9. Verfahren zum Drehen eines Sitzes (8) einer Komfortvorrichtung gemäß Anspruch 8, **dadurch gekennzeichnet, dass** es aufweist:
- gleichzeitiges Betätigen des ersten (24) und des zweiten (26) Steuerungsorgans und
- Versetzen in Drehung des Sitzes (8) um die vertikale Achse von der einen in die andere der extremen Winkelpositionen.

## Claims

1. Rotation device (10) for a seat (8), especially for a railway vehicle, comprising:
- a base (20) for receiving the seat (8), rotatable about a vertical axis between two end angular positions,
- means for locking the base (20) in the two end angular positions, and
- means for unlocking the base,
**characterised in that** the unlocking means comprise first (24) and second (26) control members, the unlocking means being configured to unlock the base (20) only when the first (24) and second (26) control members are actuated simultaneously.

2. Rotation device (10) according to claim 1, comprising a support structure (12) for the seat (8), comprising the base (20), the first control member (24) being formed by a pedal arranged on the support structure (12).

3. Rotation device (10) according to claim 1 or 2, wherein the second control member (26) is formed by a first button formed on a first armrest (9) of the seat (8).

4. Rotation device (10) according to claim 3, wherein the first button is a button for controlling the inclination of the seat (8).

5. Rotation device (10) according to claim 3 or 4, comprising two second control members (26), independent of one another, one being formed by said first button and the other being formed by a second button formed on a second armrest (9) of the seat (8).

6. Rotation device (10) according to any one of the preceding claims, wherein the unlocking means are configured to remain active when the base (20) is in an intermediate angular position between the end angular positions.

7. Rotation device (10) according to any one of the preceding claims, wherein the first (24) and second (26) control members are pneumatic control members.

8. Comfort device for a railway vehicle, comprising a seat (8), **characterised in that** it comprises a rotation device (10) for the seat (8) according to any one of claims 1 to 7, on which the seat (8) is arranged.

9. Method for rotating a seat (8) of a comfort device according to claim 8, **characterised in that** it comprises:
- simultaneously actuating the first (24) and second (26) control members, and
- driving the seat (8) in rotation about the vertical axis, from one of the end angular positions to the other.
